(19) **Europäisches Patentamt**
**European Patent Office**
**Office européen des brevets**

(11) **EP 1 506 601 B1**

(12) **EUROPÄISCHE PATENTSCHRIFT**

(45) Veröffentlichungstag und Bekanntmachung des Hinweises auf die Patenterteilung:
**28.10.2009 Patentblatt 2009/44**

(51) Int Cl.:
*H01S 3/098* $^{(2006.01)}$    *G02B 17/08* $^{(2006.01)}$

(21) Anmeldenummer: **03726986.7**

(86) Internationale Anmeldenummer:
**PCT/AT2003/000136**

(22) Anmeldetag: **13.05.2003**

(87) Internationale Veröffentlichungsnummer:
**WO 2003/098314 (27.11.2003 Gazette 2003/48)**

(54) **KURZPULS-LASERVORRICHTUNG MIT VORZUGSWEISE PASSIVER MODENVERKOPPLUNG UND MEHRFACHREFLEXIONS-TELESKOP HIERFÜR**

SHORT-PULSE LASER DEVICE WITH A PREFERABLY PASSIVE MODE COUPLING AND A MULTIPLE REFLECTION TELESCOPE THEREFOR

DISPOSITIF LASER A IMPULSIONS COURTES PRESENTANT DE PREFERENCE UN COUPLAGE DE MODES PASSIF ET TELESCOPE A REFLEXION MULTIPLE CORRESPONDANT

(84) Benannte Vertragsstaaten:
**AT BE BG CH CY CZ DE DK EE ES FI FR GB GR HU IE IT LI LU MC NL PT RO SE SI SK TR**

(30) Priorität: **17.05.2002 AT 7632002**

(43) Veröffentlichungstag der Anmeldung:
**16.02.2005 Patentblatt 2005/07**

(73) Patentinhaber: **Femtolasers Produktions GmbH 2100 Korneuburg (AT)**

(72) Erfinder:
• **POPPE, Andreas**
**A-3435 Zwentendorf (AT)**
• **STINGL, Andreas**
**A-2100 Korneuburg (AT)**

(74) Vertreter: **Sonn & Partner Patentanwälte Riemergasse 14 1010 Wien (AT)**

(56) Entgegenhaltungen:
• **CHO S H ET AL: "GENERATION OF 90-NJ PULSES WITH A 4-MHZ REPETITION-RATE KERR-LENS MODE-LOCKED TI:AL2O3 LASER OPERATING WITH NET POSITIVE AND NEGATIVE INTRACAVITY DISPERSION" OPTICS LETTERS, OPTICAL SOCIETY OF AMERICA, WASHINGTON, US, Bd. 26, Nr. 8, 15. April 2001 (2001-04-15), Seiten 560-562, XP001077217 ISSN: 0146-9592 in der Anmeldung erwähnt**
• **CHO S H ET AL: "LOW-REPETITION-RATE HIGH-PEAK-POWER KERR-LENS MODE-LOCKED TI: AL2O3 LASER WITH A MULTIPLE-PASS CAVITY" OPTICS LETTERS, OPTICAL SOCIETY OF AMERICA, WASHINGTON, US, Bd. 24, Nr. 6, 15. März 1999 (1999-03-15), Seiten 417-419, XP000829706 ISSN: 0146-9592**
• **SENNAROGLU A ET AL: "Design criteria for Herriott-type multi-pass cavities for ultrashort pulse lasers" OPTICS EXPRESS, 5 MAY 2003, OPT. SOC. AMERICA, USA, Bd. 11, Nr. 9, XP002280035 ISSN: 1094-4087**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 506 601 B1

**Beschreibung**

Die Erfindung betrifft ein Mehrfachreflexions-Teleskop für eine Kurzpuls-Laservorrichtung, zur Vergrößerung von dessen Resonatorlänge, welches Mehrfachreflexions-Teleskop mit Spiegeln aufgebaut ist, um einen in den Raum zwischen ihnen eingekoppelten Laserstrahl vor seinem Auskoppeln zurück in die übrige Laservorrichtung mehrmals zwischen den Spiegeln hin und her zu reflektieren, wobei aufeinander folgende außermittige Reflexpunkte an den Spiegeln gegeneinander versetzt sind.

In entsprechender Weise bezieht sich die Erfindung auf eine Kurzpuls-Laservorrichtung mit vorzugsweise passiver Modenverkopplung, mit einem Resonator, der einen Laserkristall sowie mehrere Spiegel enthält, die einen langen Resonatorarm sowie einen kurzen Resonatorarm definieren, und von denen einer einen Pumpstrahl-Einkoppelspiegel und einer einen Laserstrahl-Auskoppler bildet, und mit einem die Resonatorlänge vergrößernden, einem der Resonatorarme zugeordneten Mehrfachreflexions-Teleskop, welches mit Spiegeln aufgebaut ist, um einen in den Raum zwischen ihnen eingekoppelten Laserstrahl vor seinem Auskoppeln zurück in den übrigen Resonator mehrmals zwischen den Spiegeln hin und her zu reflektieren, wobei aufeinander folgende außermittige Reflexpunkte an den Spiegeln gegeneinander versetzt sind.

Kurzpuls-Laservorrichtungen haben in jüngster Zeit immer größeres Interesse gefunden, da im Hinblick auf die extrem kurzen Impulsdauern im Femtosekundenbereich, bei Impulsspitzenleistungen von > 1 MW, die verschiedensten Anwendungen in Forschung und Industrie ermöglicht werden. So können derartige Kurzpuls-Laservorrichtungen mit Impulsdauern im Femtosekundenbereich zur zeitaufgelösten Untersuchung der Wechselwirkung zwischen elektromagnetischer Strahlung und Materie verwendet werden. Andererseits können im Hinblick auf die zunehmende Miniaturisierung in der Materialbearbeitung feinste Strukturen exakt und mit hoher Geschwindigkeit gefertigt werden. Femtosekunden-Laservorrichtungen mit hoher Ausgangspulsenergie und hoher Wiederholrate können hiefür ideal eingesetzt werden. Wünschenswert ist dabei eine Laservorrichtung, die Laserimpulse mit einer Impulsdauer in der Größenordnung von 10 fs sowie mit einer Energie von beispielsweise 25 bis 30 nJ bei einer Impulswiederholrate in der Größenordnung von 10 MHz erzeugt. Die im Vergleich zu früheren Laservorrichtungen im Femtosekundenbereich relativ langsame Impulswiederholrate (in der Größenordnung von 10 MHz anstatt beispielsweise 80 MHz) bei einem üblichen Titan-Saphir-fs-Laser ist deshalb erwünscht, da dann eine höhere Impulsspitzenleistung bzw. eine höhere Impulsenergie erzielt werden kann, was für die Materialbearbeitung von Interesse ist. Derartige vergleichsweise niedrige Repetitionsraten, die umgekehrt eine relativ lange Impulsumlaufzeit im Laserresonator bedeuten, bringen jedoch rein rechnerisch eine entsprechende Erhöhung der Länge des Resonators, z.B. von 2 m auf 16 m, wodurch sich die Abmessungen der Laservorrichtung vergrößern.

Basierend auf einer frühen Arbeit von D. Herriott et al., "Off-Axis Paths in Spherical Mirror Interferometers", Applied Optics, April 1964, Vol. 3, Nr. 4, Seiten 523-526, wurde nun von S.H. Cho et al. im Artikel "Generation of 90-nJ pulses with a 4-MHz repetition-rate Kerr-lens mode-locked Ti:Al2O3 laser operating with net positive and negative intracavity dispersion", Optics Letters, 15. April 2001, Vol. 26, Nr. 8, Seiten 560-562, bereits eine Verlängerung der Impulsumlaufzeiten durch Vorsehen eines "multiple-pass"-Resonatorteils, hier auch "Mehrfachreflexions"-Teleskop bzw. kurz "Teleskop" (in Anlehnung an den Artikel von A. Poppe et al., "A Sub-10 fs, 2.5-MW Ti:Sapphire Oscillator", Ultrafast Optics 1999, S. 154-157, Ascona, Schweiz (1999)) bezeichnet, vorzusehen, um so durch einen Mehrfachdurchlauf in diesen Resonatorteil, aufgrund einer Mehrzahl von Reflexionen an einander gegenüberstehenden Spiegel, die Impulsumlaufzeit zu erhöhen und dadurch die Repetitionsrate herabzusetzen. Dadurch gelingt es, den Energieteil des pro Umlauf ausgekoppelten Impulsteiles entsprechend zu erhöhen.

Nachteilig bei diesen bekannten Laservorrichtungen bzw. Teleskopen ist jedoch, dass noch immer relativ große Abmessungen für den Laserresonator erforderlich sind, so dass die Abmessungen der Laservorrichtung insgesamt zu einem relativ unhandlichen Gerät führen. Weiters ist bei den bekannten Laservorrichtungen auch die Stabilität der Laserstrahlung ein Problem, wobei zu berücksichtigen ist, dass durch das Teleskop Abbildungen des Laserstrahlquerschnitts bedingt werden, die für eine Stabilität möglichst gut angepasst an den übrigen Resonator sein müssen. Bei den bekannten Anordnungen ist die Situation jedoch so, dass bereits geringe Ungenauigkeiten in den Positionen der Spiegel des Teleskops, somit bereits relativ geringe Resonatorlängenänderungen, zu wesentlichen Änderungen im Stahlquerschnitt führen, was Instabilitäten im Resonator insgesamt zur Folge hat. Weiters ist nachteilig, dass bei der aus dem Artikel von Cho et al. bekannten Laservorrichtung, wo der Laserstrahl in den Teleskopteil durch Schlitze in einem der Teleskop-Spiegel eingekoppelt und aus diesem Teleskopteil durch entsprechende Schlitze im Spiegel wieder ausgekoppelt wird, die Spiegelausbildung aufwendig und problematisch in der Fertigung ist.

Aufgabe der Erfindung ist es daher, bei einer Kurzpuls-Laservorrichtung wie eingangs angegeben eine Erhöhung der Impulsspitzenleistung durch Erhöhung der Impulsumlaufzeit in der Laservorrichtung bei nichtsdestoweniger vergleichsweise kleinen Abmessungen des Resonators zu ermöglichen; weiters soll eine gute Anpassung des Teleskops an den übrigen Resonator und damit eine hohe Stabilität in der Laserstrahlerzeugung ermöglicht werden, wobei auch eine exakte Feinjustierung der Anpassung der Resonatorteile möglich sein soll. Ferner ist es ein Ziel der Erfindung, für das Ein- und Auskoppeln des Laserstrahls im Bereich des Teleskops des Resonators einfache angepasste Mittel vorzusehen.

Zur Lösung dieser Aufgabe sieht die Erfindung ein Teleskop wie in Anspruch 1 definiert sowie eine Kurzpuls-Laservorrichtung wie in Anspruch 8 angegeben vor. Vorteilhafte Ausführungsformen und Weiterbildungen sind in den abhängigen Ansprüchen definiert.

Aufgrund der vorstehenden Ausbildung wird das Teleskop praktisch in seinen Abmessungen halbiert und "gefaltet". Diese Maßnahme basiert dabei auf der Erkenntnis, dass die Wellenfront des Laserstrahls bei der Reflexion an einem gekrümmten Spiegel eine entsprechend gekrümmte Fläche beschreibt, wobei sich die Wellenfront dann bis zur Reflexion am gegenüberliegenden Spiegel derart ändert, dass sie der dortigen Krümmung entspricht, wobei in der Mitte dazwischen eine Situation erreicht wird, in der die Wellenfront eben ist; an dieser Stelle wird gemäß der Erfindung der plane Spiegel angeordnet. Abgesehen von der dadurch erzielten Abmessungsreduktion ist auch ein wesentlicher Vorteil darin zu sehen, dass der plane Spiegel - üblicherweise werden bei Laserresonatoren Mehrschichtspiegel aus dielektrischen Materialien verwendet - wesentlich preiswerter hergestellt werden können als gekrümmte Substrat-Spiegel. Ein zusätzlicher Vorteil ergibt sich bei dieser Anordnung auch, dass für das Einkoppeln des Laserstrahls bzw. für sein Auskoppeln ausreichend Platz ist, wenn diese Ein- und Auskopplung ungefähr in der Mitte zwischen dem gekrümmten Spiegel und dem planen Spiegel erfolgt, da dort die im Zuge der Mehrfachreflexionen gegebenen benachbarten Strahlgänge relativ weit voneinander beabstandet sind, so dass, wie nachstehend noch ausgeführt werden wird, entsprechende Ein- bzw. Auskoppelspiegel für das "Aufbrechen" des einen Strahls bzw. Strahlgangs problemlos angebracht werden können. Dadurch können andererseits die für die Mehrfachreflexionen verantwortlichen Spiegel ohne Schlitze, Durchbohrungen oder dergl. hergestellt werden.

Im Hinblick auf die Stabilität der Laserstrahlung sowie auf die möglichst einfache Ausbildung der Spiegel des Teleskops wie auch eine möglichst geringe Belastung der Spiegel im Betrieb hat es sich weiters als vorteilhaft erwiesen, wenn auf dem einen gekrümmten Spiegel abwechselnd Reflexpunkte dieses Spiegels sowie Reflexpunkte des gedachten anderen gekrümmten Spiegels in einander entsprechenden Bogenabständen auf einer gedachten Kreislinie angeordnet sind. Bei dieser Anordnung erfolgt somit keine "Verschränkung" der Strahlengänge der Laserstrahlung zwischen den Spiegeln des Teleskops, vielmehr verlaufen die Strahlengänge, denen der Laserstrahl bei den Mehrfachreflexionen folgt, "zick-zack-förmig" entsprechend einer ungefähren Zylinderfläche oder Kegelstumpffläche zwischen den Spiegeln.

Im Hinblick auf die speziell angestrebte Erhöhung der Impulsumlaufzeit für die Ausbildung der Kurzpuls-Laservorrichtung für eine Anwendung in der Fertigungstechnik ist es weiters günstig, wenn insgesamt acht. Reflexpunkte auf dem einen gekrümmten Spiegel vorgesehen sind.

Für die Stabilität der Laserstrahlung bzw. bei der Anpassung von Teleskop und Resonator ist es vorteilhaft, wenn der Abstand zwischen den Spiegeln und der Krümmungsradius des gekrümmten, konkaven Spiegels der Beziehung

$$L/R = 1 \pm \sqrt{(1+\cos\alpha)/2}$$ entsprechen,

wobei

L   der doppelte Abstand zwischen dem gekrümmten und dem planen Spiegel ist,

R   der Krümmungsradius des gekrümmten Spiegels ist, und

$\alpha$   der Zentriwinkel zwischen jeweils zwei aufeinander folgenden, dem einen gekrümmten Spiegel tatsächlich zugeordneten, auf einer Kreislinie liegenden Reflexpunkten ist.

Für eine einfache, stabile Ausbildung ist hier weiters vorgesehen, dass der gekrümmte Spiegel des Teleskops ein konkaver Spiegel ist, für den

$$L/R = 1 - \sqrt{(1+\cos\alpha)/2}$$ gilt.

Wie bereits erwähnt wird durch die erfindungsgemäße Ausbildung mit der "Faltung" des Teleskops eine günstige Möglichkeit zur Ein- und Auskopplung des Laserstrahls im Bereich des Teleskops geschaffen, und demgemäß zeichnet sich eine besonders vorteilhafte Ausführungsform der erfindungsgemäßen Kurzpuls-Laservorrichtung dadurch aus, dass im Wesentlichen in der Mitte zwischen dem gekrümmten und dem planen Spiegel im Weg eines der Strahlgänge zwischen diesen beiden Spiegeln Ein- und Auskoppelspiegel für den Laserstrahl vorgesehen sind.

Schließlich ist es aus Stabilitätsgründen, zur besseren Anpassung des Teleskops an den übrigen Resonator, von besonderem Vorteil, wenn das Teleskop dem langen Resonatorarm zugeordnet ist. Untersuchungen haben nämlich gezeigt, dass am langen Resonatorarm ein Laserstrahl mit relativ großem Querschnitt zum Einkoppeln in den Teleskopteil zur Verfügung steht, wobei sich dann bei der vorliegenden Teleskop-Ausbildung der Querschnitt des Laserstrahls bei den verschiedenen Reflexionen im Teleskopteil nur geringfügig ändert, bevor er wieder - mit praktisch dem gleichen Querschnitt wie beim Einkoppeln - ausgekoppelt und dem übrigen Resonatorteil zugeführt wird. Dadurch spielen etwaige kleine Längenänderungen, d.h. kleine Änderungen in den Abständen zwischen den Linsen des Teleskops, kaum eine Rolle, da sich dadurch der Stahlquerschnitt nicht wesentlich ändert. Dadurch wird eine optimale Anpassung zwischen dem Teleskop und dem übrigen Resonator ermöglicht.

Die Erfindung wird nachfolgend anhand von in der Zeichnung veranschaulichten bevorzugten Ausführungsbeispielen, auf die sie jedoch nicht beschränkt sein soll, noch weiter erläutert. Es zeigen:

Fig. 1 in einem Schema den Aufbau einer Kurzpuls-Laservorrichtung mit Teleskop gemäß der Erfindung;

Fig. 2 eine solche Kurzpuls-Laservorrichtung in ihrer Anordnung auf einer Montageplatte, wobei schematisch auch das Ein- und Auskoppeln des Laserstrahls im Bereich des Teleskops veranschaulicht ist;

Fig. 3 schematisch eine Ansicht eines herkömmlichen Teleskops mit zwei konkav gekrümmten Teleskop-Spiegeln; die

Fig. 4 und 5 schematische Ansichten dieser Teleskop-Spiegel mit den Reflexpunkten darauf;

Fig. 6 einen gedachten Zwischenschritt bei einer "Faltung" eines solchen Teleskops gemäß Fig. 3, unter Vorsehen eines planen Teleskop-Spiegels;

Fig. 7 eine Ansicht eines gemäß der Erfindung ausgebildeten Teleskops mit einem konkav gekrümmten Spiegel und einem planen Spiegel, wobei schematisch auch das Einkoppeln des Laserstrahls in das Teleskop sowie das Auskoppeln des Laserstrahls aus dem Teleskop veranschaulicht ist;

Fig. 8 in einer schematischen Ansicht entsprechend Fig. 4 und 5 den konkav gekrümmten Teleskop-Spiegel von Fig. 7 mit den Reflexpunkten darauf;

Fig. 9 in einem Diagramm schematisch den Verlauf des Radius R (in mm) des Laserstrahls in Querrichtung über der abgewickelten Weglänge x (in m) des Laserstrahls im Resonator, mit einem kurzen Resonatorarm, einem langen Resonatorarm und dem diesen zugeordneten Teleskop;

Fig. 10 in einem Diagramm anhand von vier Beispielen die Änderungen des Strahldurchmessers über dem Abstand der Teleskop-Spiegel, zur Veranschaulichung der Anpassung des Laserstrahls in Hinblick auf die Stabilität; und die

Fig. 11, 12, 13, 14 und 15 in Diagrammen ähnlich Fig. 9 den Verlauf des transversalen Strahlradius R' über der abgewickelten Weglänge x bei fünf konkreten Anordnungen.

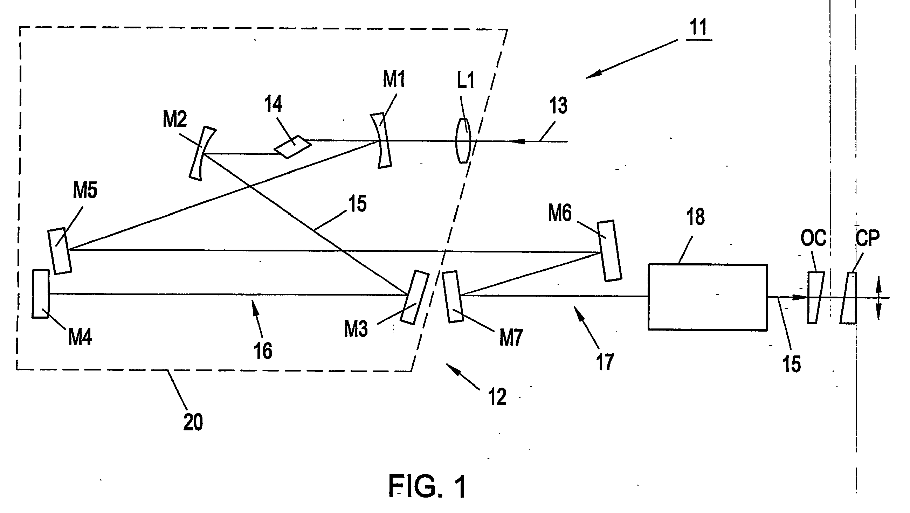

In Fig. 1 ist schematisch eine Kurzpuls-Laservorrichtung 11 veranschaulicht, in der für die Kurzpulserzeugung z.B. das an sich bekannte "Kerr-lens mode locking"-Prinzip verwendet wird.

Die Laservorrichtung 1 weist gemäß Fig. 1 einen Resonator 12 auf, dem ein Pumpstrahl 13, z.B. ein Argonlaserstrahl, zugeführt wird. Der Pumplaser selbst, z.B. Argonlaser, ist der Einfachheit halber in Fig. 1 weggelassen und gehört dem Stand der Technik an.

Nach Durchlaufen einer Linse L1 und eines dichroitischen Spiegels M1 regt der Pumpstrahl 13 einen Laserkristall 14 an, im vorliegenden Beispiel einen Titan:Saphir(Ti:S)-Festkörperlaser-kristall. Der dichroitische Spiegel M1 ist für den Pumpstrahl 13 durchlässig, jedoch hochreflektierend für den Ti:S-Laserstrahl. Dieser Laserstrahl 15, der Resonatorstrahl, trifft dann auf einen Laserspiegel M2 auf und wird von diesem zu einem Laserspiegel M3 reflektiert. Dieser Laserspiegel M3 reflektiert den Laserstrahl wieder zu einem Laserspiegel M4, von wo der Laserstrahl 15 zu den Laserspiegeln M3, M2 und M1 zurück reflektiert wird, wobei er den Laserkristall 14 ein zweites Mal durchläuft. Dieser Resonatorteil mit den Spiegeln M2, M3 und M4 bildet einen sog. kurzen Resonatorarm 16, der im gezeigten Beispiel Z-förmig ist.

Vom Spiegel M1 wird der Laserstrahl 15 dann zu einem Laserspiegel M5 und von diesem zu einem Laserspiegel M6 sowie zu einem weiteren Laserspiegel M7 reflektiert, wodurch ein zweiter Z-gefalteter Resonatorarm 17 gebildet ist, der als langer Resonatorarm 17 vorgesehen ist. Vom Laserspiegel M7 gelangt der Laserstrahl 15 in ein in Fig. 1 nur schematisch gezeichnetes Teleskop 18 und von diesem zu einem als Auskoppler fungierenden Endspiegel OC. Über diesen Auskoppel-Endspiegel OC wird ein Teil des Laserstrahls 15 unter Vorsehen einer Kompensationsmöglichkeit ausgekoppelt, wobei ein Kompensationsplättchen CP sowie nicht näher gezeigte Spiegel in Dünnschichttechnik für eine Dispersionskompensation sowie dafür sorgen, dass keine unerwünschten Reflexionen in Richtung Laserresonator 12 auftreten.

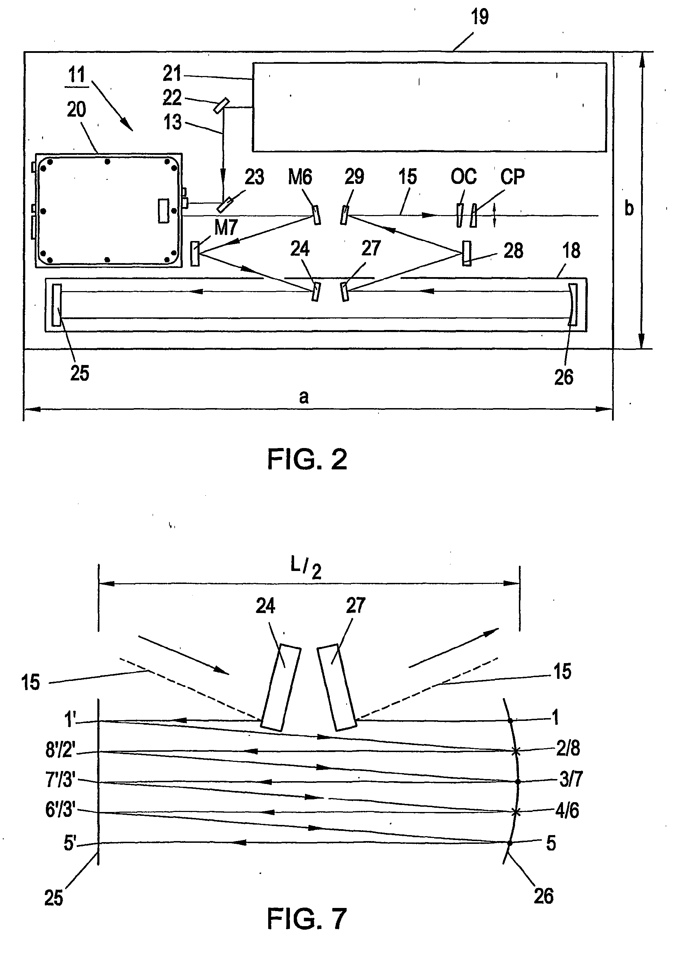

Der Laserkristall 14 ist ein planparalleler Körper, welcher optisch nicht-linear ist und ein Kerrelement bildet, welches für höhere Feldstärken des Laserstrahls 15 eine größere wirksame optische Dicke besitzt, hingegen eine geringere wirksame Dicke aufweist, wo die Feldstärke bzw. Intensität des Laserstrahls geringer ist. Dieser an sich bekannte Kerreffekt wird zur Selbst-fokussierung des Laserstrahls 15 ausgenutzt, d.h. der Laserkristall 14 bildet für den Laserstrahl 15 eine Fokussierungslinse. Die Modenverkopplung kann weiters in an stich herkömmlicher Weise z.B. mit Hilfe einer in Fig. 1 und 2 nicht näher gezeichneten Blende (vgl. z.B. AT 405 992 B) realisiert werden; es wäre aber auch denkbar, einen der Endspiegel, z.B. M4, als sättigbaren Bragg-Reflektor auszubilden und so zur Modenverkopplung einzusetzen.

Die Spiegel M1, M2 ... M7 sind in Dünnschichttechnik ausgeführt, d.h. sie sind je aus vielen Schichten aufgebaut, die bei der Reflexion des eine große spektrale Bandbreite aufweisenden ultrakurzen Laserpulses ihre Funktion ausüben. Die verschiedenen Wellenlängenkomponenten des Laserstrahls 15 dringen unterschiedlich tief in die Schichten des jeweiligen Spiegels ein, bevor sie reflektiert werden. Dadurch werden die verschiedenen Wellenlängenkomponenten verschieden lang am jeweiligen Spiegel verzögert; die kurzwelligen Komponenten werden weiter außen (d.h. zur Oberfläche hin) reflektiert, die langwelligen Anteile hingegen tiefer im Spiegel. Dadurch werden die langwelligen Komponenten gegenüber den kurzwelligen Komponenten zeitlich verzögert. Auf diese Weise wird eine Dispersionskompensation insofern erhalten, als im zeitbereich besonders kurze Pulse (vorzugsweise im Bereich von 10 Femtosekunden und darunter) ein breites Frequenzspektrum besitzen; dies kommt daher, dass die verschiedenen Frequenzkomponenten des Laserstrahls 15 im Laserkristall 14 einen unterschiedlichen Brechungsindex "sehen", d.h. die optische Dicke des Laserkristalls 14 ist für die verschiedenen Frequenzkomponenten verschieden groß, und die verschiedenen Frequenzkomponenten werden daher beim Durchlaufen des Laserkristalls 14 verschieden verzögert. Diesem Effekt wird durch die genannte Dispersionskompensation an den Dünnschicht-Laserspiegeln M1, M2 ... M7 begegnet.

Soweit vorstehend beschrieben handelt es sich um einen an sich herkömmlichen Aufbau eines Kurzpulslasers mit Modenverkopplung, und eine detailliertere Beschreibung desselben kann sich daher erübrigen.

Im Betrieb wird bei jedem Umlauf des Laserstrahls 15 im kurzen Resonatoram 16 sowie im langen Resonatorarm 17 wie bereits erwähnt ein Teil des Laserpulses mit Hilfe des Auskopplers OC ausgekoppelt. In der Praxis kann die Länge eines Laserresonators 12 ohne Teleskop 18 ca. 2 m betragen, wobei beispielsweise eine Repetitionsrate entsprechend einer Frequenz von 75 bis 100 MHz, z.B. 80 MHz, erzielt wird. Um nun durch Erhöhung der Umlaufzeit und damit durch Reduzierung der Repetitionsrate eine höhere Pulsspitzenleistung, also Pulsenergie, in Hinblick auf den Einsatz der Laservorrichtung 11 beispielsweise für Materialbearbeitungen zu erzielen, wird die Länge des Laserresonators 12 durch den Einbau des Teleskops 18 vergrößert. Bei einer Verachtfachung der gesamten Resonatorlänge, also beispielsweise bei einer Resonatorlänge von ca. 15 m oder 16 m, kann dann die Repetitionsrate beispielsweise bei ca. 10 MHz liegen. Um diese großen Weglängen für die Laserpulse zu erzielen, ist im Teleskop 18 eine Spiegelanordnung vorgesehen, um eine Mehrfachreflexion des Laserstrahls 15 zu erzielen, so dass die Baulänge des Teleskops 18 entsprechend den Mehrfachreflexionen verkürzt werden kann.

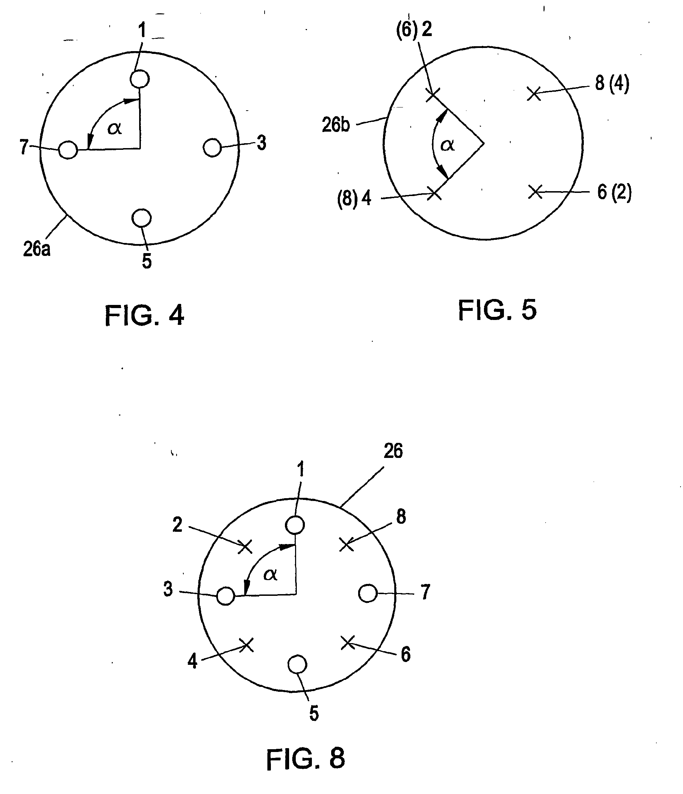

In Fig. 2 ist die Anordnung einer solchen Laservorrichtung 11 gemäß Fig. 1 auf einer Montageplatte 19 schematisch veranschaulicht, die eine Größe a mal b von beispielsweise a = 900 mm mal b = 450 mm aufweist. Auf dieser Montageplatte 19 ist der in Fig. 1 mit strichlierten Linien umrahmte Teil 20 des Laserresonators 12 in einem Gehäuse gekapselt angebracht, und weiters ist auf der Montageplatte 19 auch der Pumplaser 21 angeordnet, von dem der Pumpstrahl 13 über zwei Spiegel 22, 23 dem Laserresonatorteil 20 zugeführt wird. Aus diesem Resonatorteil 20 tritt der Laserstrahl 15 in Richtung des Laserspiegels M6 aus, von dem er wie beschrieben zum Laserspiegel M7 reflektiert wird. Von dort gelangt der Laserstrahl 15 in das Teleskop 18, wobei im Teleskop 18, z.B. in einem Gehäuse, ein Einkoppelspiegel 24 in einen der mehreren Strahlengänge zwischen zwei einander gegenüberstehenden Teleskop-Spiegeln 25, 26 angeordnet ist. Dieser Einkoppelspiegel 24 reflektiert den Laserstrahl 15 zum einen, in Fig. 2 linken, planen Teleskop-Spiegel 25, der den Laserstrahl 15 sodann zum gegenüberliegenden, konkav gekrümmten Teleskop-Spiegel 26 reflektiert. Zwischen diesen beiden Teleskop-Spiegeln 25, 26 wird der Laserstrahl 15 dann mehrmals, z.B. acht mal, hin und her reflektiert, wobei am konkav gekrümmten Teleskop Spiegel 26 in diesem Beispiel insgesamt 8 Reflexpunkte, entsprechend den acht Laserstrahl-Reflexionen, auf einer gedachten Kreislinie um das Zentrum des konkaven Spiegels 26 herum vorliegen, wie dies nachfolgend noch näher anhand der Fig. 8 in Verbindung mit Fig. 7 erläutert werden wird.

Aus dem Teleskop 18 wird schließlich der Laserstrahl 15 mit Hilfe eines Auskoppelspiegels 27 ausgekoppelt, der nahe dem Einkoppelspiegel 14 im selben Strahlengang wie dieser angeordnet ist, und der den Laserstrahl 15 zu einem weiteren Spiegel 28 reflektiert, von wo der Laserstrahl 15 über einen Spiegel 29 zum Auskoppler OC gelangt. Diese Spiegel 28, 29 sind der Einfachheit halber in der schematischen Darstellung von Fig. 1 nicht näher veranschaulicht. Wäre im Übrigen kein Teleskop 18 vorgesehen, wäre die Position des Endspiegels (Auskopplers) OC die Position des Laserspiegels M6 in Fig. 1.

Ein wichtiger Aspekt bei einer Kurzpuls-Laservorrichtung mit verlängerter Laserpuls-Umlaufzeit ist die Stabilität der Laserschwingung, wobei eine entsprechende Anpassung im Hinblick auf die durch die einzelnen Spiegel bewirkten Abbildungen des Laserstrahlquerschnitts vorzunehmen ist. Ein weiterer bedeutsamer Aspekt, der gerade für industrielle Anwendungen, also im Fall von Materialbearbeitungen, besonders wichtig ist, ist die Kompaktheit der Laservorrichtung 11; die erwähnten Abmessungen von 900 mm x 450 mm entsprechen herkömmlichen Lasergeräten für die Industrie, wobei jedoch hier (s. Fig. 2) zusätzlich der Teleskopteil 18 - der auch eine eigene Baueinheit bilden kann - eingebaut ist, so dass ohne Abmessungsvergrößerung die gewünschten längeren Umlaufzeiten des Laserstrahls 15 und damit die höheren Pulsenergien erzielt werden. Angestrebt werden dabei Pulsenergien in der Größenordnung von mehreren hundert nJ anstatt früher weniger als 10 nJ. Damit können Spitzenpulsleistungen von größer als 2 MW erzielt werden.

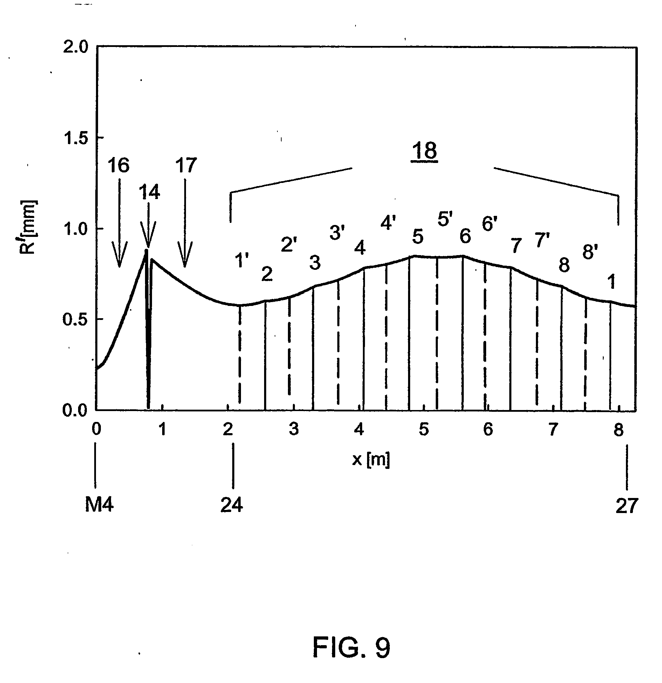

Anders als bei früheren Laservorrichtungen mit Teleskop ist bei der vorliegenden Laservorrichtung 11 das Teleskop 18 wie erwähnt dem langen Resonatorarm 17 zugeordnet, da dies für die Stabilität der Oszillation von Vorteil ist, wie nachfolgend auch noch näher anhand der Fig. 9 erläutert werden wird. Im Teleskop 18 läuft der Laserstrahl 15 zick-zack-förmig ungefähr längs einer gedachten zylindrischen Fläche oder Kegelstumpffläche mehrmals, z.B. acht mal, zwischen den Spiegeln 25, 26 hin und her; bei Anordnung des Einkoppelspiegels 24 und Auskoppelspiegels 27 ungefähr in der Mitte der Länge des Teleskops 18 ist genügend platz für die Spiegel 24, 27 gegeben, da der Abstand zum nächsten Strahlengang an dieser Stelle relativ groß ist, so dass die anderen Strahlengänge des Laserstrahls 15 zwischen den Spiegeln 25, 26 nicht beeinträchtigt werden. Von Bedeutung ist dabei auch die hier gegebene sog. "schwach fokussierende" Anordnung, die nachfolgend noch näher erläutert werden wird.

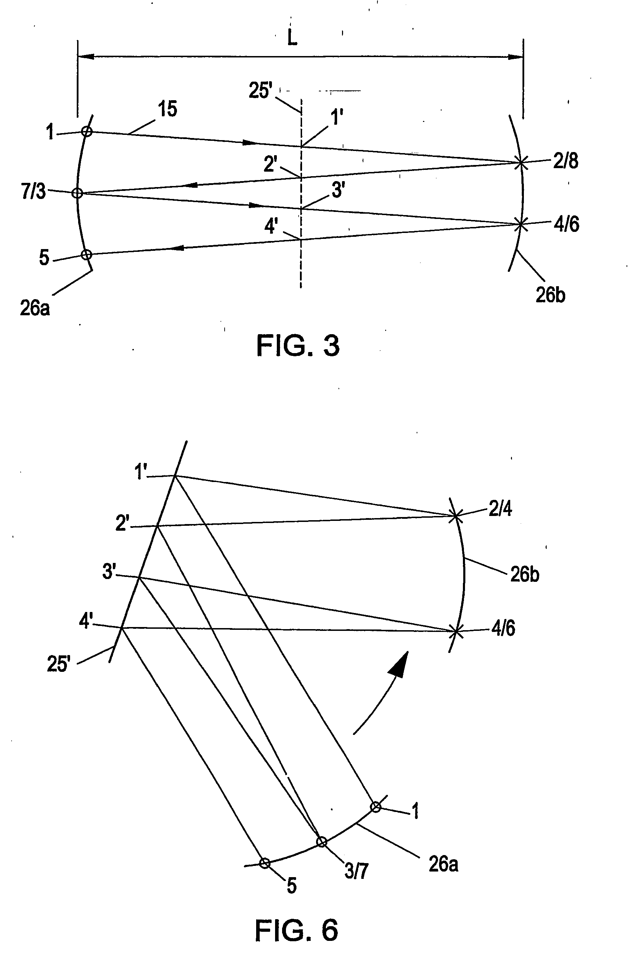

Von besonderer Bedeutung ist für die vorliegende Ausführung, dass ein extrem kurzer Teleskopteil 18 trotz Verlängerung der Weglänge des Laserstrahls 15 auf beispielsweise das 8fache durch eine ganz spezielle Ausbildung erzielt wird, die nun anhand der Fig. 3 bis 8 näher erläutert werden sollen.

In Fig. 3 ist ein an sich herkömmlicher grundsätzlicher Aufbau eines Teleskops mit zwei konkav gekrümmten Spiegeln 26a, 26b dargestellt, wobei ein Laserstrahl 15 mehrmals zwischen den beiden Spiegeln 26a, 26b hin und her reflektiert wird. Die Art der Reflexionen ist dabei derart, dass der Laserstrahl ungefähr in einer zylindrischen Mantelfläche zick-zack-förmig hin und her reflektiert wird, und zwar zwischen den Reflexpunkten 1 bis 5 (und weiter bis 8, wobei die Reflexpunkte 6, 7 und 8 in Fig. 3 in Deckung zu den Reflexpunkten 4, 3 und 2 angeordnet sind, vgl. auch die zugehörigen Fig. 4 und 5). Selbstverständlich stimmt es nicht genau, wenn von einem zick-zack-förmigen Verlauf "entsprechend einer zylindrischen Mantelfläche" gesprochen wird, da die einzelnen Strahlengänge zwischen den Spiegeln 26a, 26b geradlinig sind und schräg verlaufen, so dass sie keine Erzeugenden der Zylinderfläche bilden können, jedoch kann der Verlauf des mehrfach reflektierten Laserstrahls 15 relativ gut als einer solchen zylindrischen Fläche entsprechend angenähert werden.

Der zick-zack-förmige Verlauf bzw. der Winkelversatz der einzelnen Strahlengänge ergibt sich auch aus den beiden schematischen (Innen-) Ansichten der Spiegel 26a, 26b gemäß Fig. 4 und 5, wo die Reflexpunkte des Laserstrahls 15 an den Spiegeln 26a, 26b, nummeriert mit 1 bis 8 gezeigt sind. Dabei verläuft der Strahl vom Reflexpunkt 1 am Spiegel 26a zum demgegenüber winkelmäßig versetzt angeordneten Reflexpunkt 2 auf dem anderen Spiegel 26b, von dort zum wiederum winkelmäßig versetzten Reflexpunkt 3 am Spiegel 26a usw. Bei jedem Spiegel 26a, 26b ergibt sich als Winkelversatz für die zugehörigen Reflexpunkte, z.B. 2 und 4, ein Zentriwinkel $\alpha$ von im gezeigten Ausführungsbeispiel 90°. Bei mehr als den 2 x 4 Reflexionen ist der Zentriwinkel $\alpha$ entsprechend kleiner.

Die vorstehend anhand von Fig. 3 bis 5 erläuterte Art der Mehrfachreflexion zwischen den Spiegeln 26a, 26b des Teleskops 18 wird auch als "schwach fokussierende" Anordnung bezeichnet. Demgegenüber würde eine "stark fokussierende" Anordnung vorliegen, wenn beispielsweise vom Reflexpunkt 1 am Spiegel 26a der Laserstrahl zum Reflexpunkt 6 am Spiegel 26b, von dort zum Punkt 3 am Spiegel 26a, von diesem wiederum zum Reflexpunkt 8 am Spiegel 26b, zum Reflexpunkt 5 am Spiegel 26a, zum Reflexpunkt 2 am Spiegel 26b, zum Reflexpunkt 7 am Spiegel 26a und zum Reflexpunkt 4 am Spiegel 26b reflektiert würde, bevor der Strahl in Richtung zum Reflexpunkt 1 zurück reflektiert wird. Bei diesem Strahlenverlauf würde eine Bündelung oder "Fokussierung" im Bereich der in Fig. 3 mit einer strichlierten Linie schematisch eingezeichneten Mitte 25' zwischen den beiden Spiegeln 26a, 26b erhalten werden. Untersuchungen haben gezeigt, dass für die vorliegende Ausbildung des Teleskops 18, wie bereits in Fig. 2 angedeutet und nachfolgend näher anhand der Fig. 7 und 8 zu beschreiben, die sich aus den Fig. 3 bis 5 ergebende schwach fokussierende Anordnung besser geeignet ist, vor allem da die Strahlengänge dann im fraglichen Bereich zwischen der Mitte 25' und dem Teleskop-Spiegel 26 entsprechend weit auseinander liegen. Wie nachstehend dargelegt wird in der Mitte 25' der plane Spiegel 25 (s. auch Fig. 6) angeordnet, und da zwischen dieser Mitte 25' und dem konkaven Spiegel 26a bzw. 26b bei einer schwach fokussierenden Anordnung die Strahlengänge immer noch weit genug auseinander liegen, ist es problemlos möglich, den Einkoppelspiegel 24 und den Auskoppelspiegel 27 unter Aufbrechen bloß eines Strahlenganges unterzubringen.

In Fig. 5 sind in Klammern neben den Nummern 2, 4, 6 und 8 für die Reflexpunkte für die schwach fokussierende Anordnung auch die fortlaufenden Nummern der - entsprechend versetzten - Reflexpunkte für den Fall der stark fokussierenden Anordnung zur besseren Veranschaulichung angegeben.

Aus Fig. 3 ist weiters erklärbar, dass der Laserstrahl 15 im jeweiligen Stzahlengang, z.B. vom Reflexpunkt 1 zum Reflexpunkt 2, zunächst eine wellenfront mit einer Krümmung entsprechend der Krümmung des Spiegels 26a aufweist, die sich dann in eine entgegengesetzte Krümmung entsprechend jener am Spiegel 26b im Reflexpunkt 2 ändert. In der Mitte 25' dazwischen ergibt sich dann eine Situation mit ebener Wellenfront. Dies macht sich die vorliegende Erfindung zu Nutze, indem in dieser Mitte 25' ein ebener Spiegel, der Teleskop-Spiegel 25, angeordnet wird. Sodann werden die beiden in Fig. 3 gezeigten Teleskop-Spiegel 26a, 26b "gefaltet", d.h. in eine Deckungslage gebracht, wie sich dies aus der schematischen Darstellung in Fig. 6 in einem gedachten Zwischenschritt ergibt. Dabei wird zwecks besserem Verständnis veranschaulicht, dass der Spiegel 26a um die Mitte 25' herum in den anderen Teleskop-Spiegel 26b hinein geschwenkt wird, bis die beiden Spiegel 26a, 26b ineinander liegen und so den konkav gekrümmten Teleskop-Spiegel 26 gemäß Fig. 2 und 7 ergeben. Gegenüber liegt dann der entsprechend der ursprünglichen Mittenebene 25' angeordnete plane Spiegel 25, s. Fig. 7.

Aus dieser "Faltung" des herkömmlichen Teleskops ergibt sich auch die Halbierung der Längenabmessung beim erfindungsgemäßen Teleskop 18 sowie weiters, dass nunmehr alle Reflexpunkte 1 bis 8 gemäß Fig. 3 bis 5 an dem einen verbleibenden konkav gekrümmten Spiegel 26 vorliegen, vgl. außer Fig. 7 auch Fig. 8, in der diese Reflexpunkte 1 bis 8 in einer schematischen Ansicht des Spiegels 26 ersichtlich sind. Zusätzlich ist in Fig. 8 auch der für den Winkelversatz maßgebliche Zentriwinkel $\alpha$ eingezeichnet. Zur besseren Unterscheidung sind die ursprünglich am einen Spiegel 26a vorliegenden Reflexpunkte mit kleinen Kreisen dargestellt (Reflexpunkte 1, 3, 5 und 7), wogegen die ursprünglich am anderen Spiegel 26b vorliegenden Reflexpunkte 2, 4, 6, 8 mit Kreuzen veranschaulicht sind. Bei der so erhaltenen endgültigen, erfindungsgemäßen Anordnung folgen daher die Reflexpunkte 1 bis 8 des einen bzw. anderen Teleskop-Spiegels 26a, 26b abwechselnd aufeinander, und zwar jeweils um einen Winkel $\alpha/2$ gegeneinander versetzt, und ihnen gegenüber liegen, zu ihnen jeweils um einen Winkel entsprechend $\alpha/4$ versetzt, Reflexpunkte 1' bis 8' am planen Spiegel 25, vgl. Fig. 7.

Man kann die Teleskopausbildung gemäß Fig. 7 auch dementsprechend so sehen, dass der Spiegel 26 dem Spiegel 26b von Fig. 3 entspricht, wobei er zusätzlich die Reflexpunkte des anderen konkaven Spiegels 26a enthält. Als Gegenstück zu diesem "kombinierten" konkaven Teleskop-Spiegel 26 dient dann der plane Spiegel 25, dessen Abstand (L/2) vom Teleskop-Spiegel 26 somit dem halben Abstand (L) der Teleskop-Spiegel 26a, 26b von Fig. 3 entspricht.

In Fig. 9 ist der Verlauf des transversalen Radius R' des Laserstrahls 15 abhängig von seinem Weg x durch die Laservorrichtung 1 dargestellt, wobei ersichtlich ist, dass am Endspiegel M4 des kurzen Resonatorarms 16 ein relativ kleiner Strahlquerschnitt gegeben ist, der dann in diesem kurzen Resonatorarm 16 bis zum Laserkristall 14 hin ansteigt; der Laserkristall 14 bewirkt wie bereits dargelegt eine Fokussierung des Laserstrahls, was durch den schmalen Einschnitt in der Kurve von Fig. 9 ersichtlich ist. Danach folgt der lange Resonatorarm 17 bis zur Zuführung des Laserstrahls zum Teleskop 18, wobei der Strahlquerschnitt am Eingang des Teleskops 18 relativ groß ist. Diesen Umstand macht sich die vorliegende Anordnung ebenfalls zu Nutze, da auf diese Weise problemlos eine gute Stabilität im Oszillator erzielbar ist, da während der mehrfachen Reflexionen im Teleskop 18 - s. auch die mit den Reflexpunkten 1 bis 8 im Teleskop 18 entsprechenden Nummern versehenen Reflexionen in Fig. 9 - jeweils nur geringe Änderungen im Strahlquerschnitt vorliegen, anders als dies im Fall der Zuordnung des Teleskops zum kurzen Resonatorarm 16 wäre. Dadurch kann problemlos eine stabile Oszillation in der Laservorrichtung 11 erreicht werden, wobei auch geringe Längenänderungen kaum zu einer Instabilität führen.

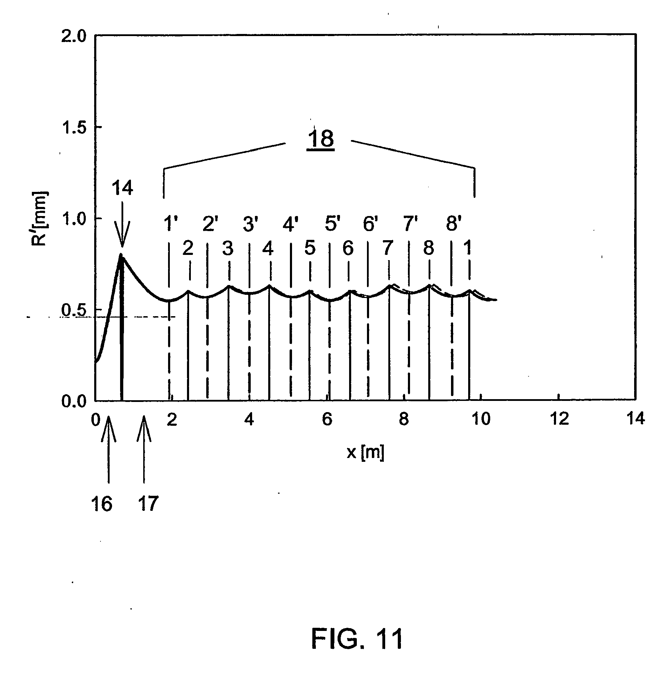

Das Diagramm von Fig. 9 ist nur ganz schematisch und soll die Verhältnisse bei der erfindungsgemäßen, besonders bevorzugten Ausbildung der Laservorrichtung 11 - mit schwach fokussierender Anordnung und Zuordnung des Teleskops 18 zum langen Resonatorarm 17 - veranschaulichen. Die Fig. 11 bis 14 zeigen demgegenüber Rechnersimulationen zu ganz konkreten Ausführungen, wobei auch die Situation für stark fokussierende Anordnungen bzw. für solche mit dem kurzen Resonatorarm 16 zugeordneten Teleskopen 18 veranschaulicht sind. In diesen Diagrammen sind auch zum leichteren Verständnis jeweils die Reflexpunkte 1 bis 8, die Resonatorarme 16, 17 sowie der Laserkristall 14 eingetragen.

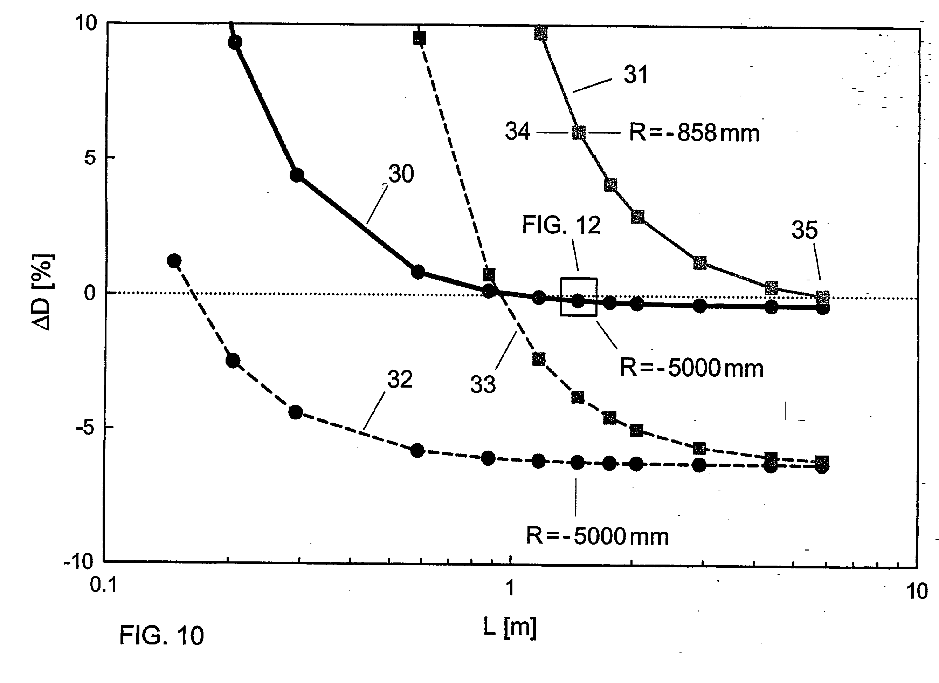

Zuvor soll jedoch noch anhand der Fig. 10 eine Erläuterung zur Stabilität des Gesamtsystems erfolgen. Hiefür ist die Beziehung

$$L/R = 1 \pm \sqrt{(1+\cos\alpha)/2}$$ von Bedeutung, wobei

L der doppelte Abstand zwischen dem gekrümmten Spiegel 26 und dem planen Spiegel 25 ist,

R der Krümmungsradius des gekrümmten, konkaven Spiegels 26 ist, und

$\alpha$ der Zentriwinkel zwischen jeweils zwei aufeinander folgenden, dem einen gekrümmten Spiegel tatsächlich zugeordneten, auf einer Kreislinie liegenden Reflexpunkten ist.

Ausgehend davon, dass wie vorstehend anhand der Fig. 7 und 8 erläutert, insgesamt acht Reflexpunkte 1 bis 8 vorhanden sind (also vier Reflexpunkte für jeden - gedachten - gekrümmten Spiegel 26a, 26b), beträgt der Zentriwinkel $\alpha=90°$, wie dies auch aus den Fig. 4, 5 und 8 hervorgeht. Weiters entspricht das Vorzeichen "-" in der vorstehenden Beziehung für die vorstehend erläuterte schwach fokussierende Anordnung (wogegen das Vorzeichen "+" für die stark fokussierende Anordnung gilt). Dementsprechend ergibt sich für das Beispiel mit insgesamt acht Reflexpunkten 1 bis 8 und für die schwach fokussierende Anordnung aus der vorstehenden Beziehung:

$$L/R = 1 - \sqrt{½}$$

Daraus folgt, dass das Verhältnis L/R = 0,293 ist. Für einen Spiegelradius von R = 5000 mm (Radiuswerte für konkav gekrümmte Spiegel werden üblicherweise mit einem "-"-Vorzeichen angegeben, vgl. auch Fig. 10, werden aber hier der Einfachheit halber ohne Vorzeichen angeführt) ergibt sich somit ein Abstand zwischen den Spiegeln 26a, 26b von L = 1465 mm. Dieser Abstand L wäre für einen diskreten Aufbau zu groß (vgl. die Montageplatten-Abmessung a = 900 mm im Fall der Ausführungsform von Fig. 2), aber mit der anhand der Fig. 6 und 7 beschriebenen "Faltung" des Teleskops 18 führt dieser Abstand zu einer gut passenden Anordnung, bei der der gekrümmte Spiegel 26 und der plane Spiegel 25 genau L/2 = 732,5 mm auseinander liegen.

Im Fall einer stark fokussierenden Anordnung, wie sie im Prinzip in dem eingangs erwähnten Dokument von Cho et al. gezeigt ist, wird wie erwähnt zwischen den beiden konkav gekrümmten Spiegeln eine Bündelung der Strahlengänge bewirkt, und bei dieser stark fokussierenden Anordnung ist in der oben stehenden Beziehung das Vorzeichen "+" zu verwenden, wobei sich dann für das Verhältnis L/R der Wert L/R = 1,707 ergibt. Dies bedeutet bei einem Abstand der Spiegel von L = 1465 mm für einen Radius R des jeweiligen Teleskop-Spiegels von R = L/1,707 = 858 mm. Mit einem solchen konkav gekrümmten Spiegel 26 und einem planen Spiegel 25 im Abstand L/2 = 732,5 mm würden die Reflexpunkte gemäß der in Fig. 5 in Klammern angegebenen Numerierung erhalten werden.

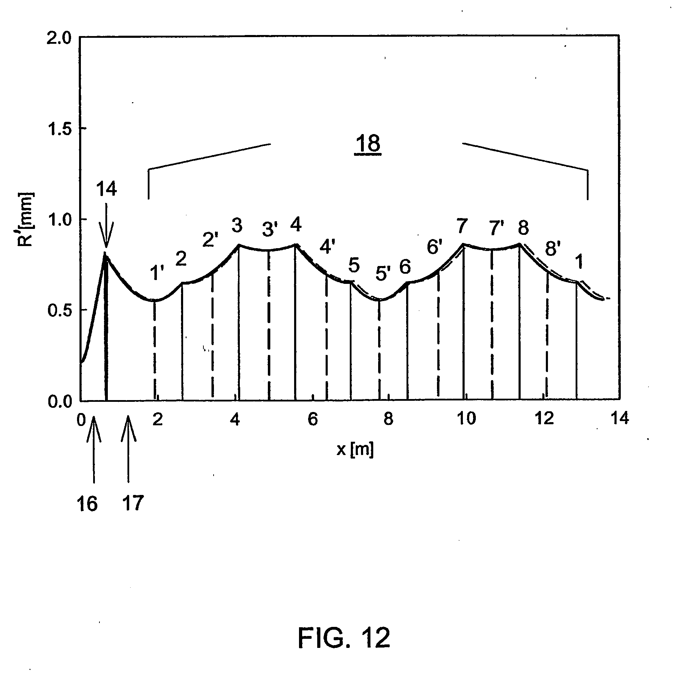

In Fig. 10 ist die x-Achse genau der (doppelte) Spiegel-Abstand L (logarithmisch aufgezeichnet). Um die praktisch realisierte Anordnung (vgl. auch Fig. 12) wurde ein Kästchen gezeichnet. Die zugehörige Kurve 30 entsteht so, dass das Teleskop 18 in den langen Arm 17 des Oszillators (1200 mm) eingekoppelt wird. Verändert man den Radius R, ändert sich der Abstand L. Berechnet man die relative (d.h. prozentuelle) Änderung $\Delta D$ des Strahldurchmessers im anderen Arm 16, und zwar am Endspiegel M4, so ergibt sich ein Werft, der in Fig. 10 auf der y-Achse aufgetragen wurde. Das Maximum der Stabilität ist genau dort, wo sich trotz einer Änderung des Teleskops 18 der Strahldurchmesser nicht ändert, also im Nullpunkt. In Fig. 10 sind noch Kurven 31, 32 und 33 für andere Ausbildungen und zu Vergleichszwecken dargestellt:

Kurve 30:    Dies ist der behandelte Fall mit der schwach fokussierenden Anordnung und dem Teleskop 18 in Zuordnung zum langen Resonatorarm 17. Der Schnittpunkt der Kurve 30 mit der Nulllinie bei R = 4000 mm. Für die angesprochene praktische Ausführung (Fig. 12) war genau dieser Spiegel kurzfristig nicht erhältlich; deshalb wurde eine Anordnung mit einem Spiegel 26 mit R = 5000 mm realisiert, vgl. auch die nachfolgende Erläuterung zu Fig. 12.

Kurve 31:    Ein Teleskop 18 im langen Resonatorarm 17 und kleinere Krümmungsradi (wie z.B. R = 858 mm) würden diese Kurve 31 erzeugen. Die Verhältnisse bei R = 858 mm (Punkt 34) würden im Vergleich zur Kurve 30 eine viel schlechtere Stabilität erzeugen. Es existiert zwar auch ein stabiler Punkt (Punkt 35), bei dem die Änderungen klein sind, dieser würde jedoch bei sehr großen Abständen der beiden Spiegel liegen (L = 6 m).

Kurve 32:    Wird das schwach fokussierende Teleskop 18 (z.B. mit Spiegelradius R = 5000 mm) dem kurzen Arm 16 des ursprünglichen Oszillators 12 zugeordnet, entsteht diese Kurve 32. Hier ist wiederum das Maximum der Stabilität bei sehr kleinen Werten des Abstandes L (< 20 cm). Dadurch würde sich - entgegen den Intentionen - keine große Verlängerung des Laserstrahl-Weges insgesamt ergeben.

Kurve 33:    Bei einer Kombination des kurzen Resonatorarms 16 als Teleskoparm und stark fokussierender Anordnung ist das Maximum der Stabilität zwar auch sehr gut (bei L = 0,8 m) gelegen, jedoch ist dort eine starke Neigung der Kurve 33 gegeben.

Es können in der Praxis durchaus Abweichungen in der Produktion (von bis zu 10%) bei den Spiegelradien auftreten. Auch ist das verwendete Modell nicht so genau und es können Abweichungen im gemessenen und berechneten Strahlprofil auftreten. Deshalb ist es umso wichtiger, breite Maxima zu finden (wie bei der Kurve 30) und nicht kritische (wie bei der Kurve 33).

In den Fig. 11 bis 15 sind sodann Kurven betreffend den transversalen Strahlradius R' in mm über der auf eine Linie (x-Achse) ausgebreiteten Resonatorlänge x in m zu konkreten Ausbildungen gezeigt, wobei diese Ausbildungen auf Rechnersimulationen beruhen, wobei jedoch die Ausführung gemäß Fig. 12 tatsächlich in der Praxis für Testzwecke realisiert wurde.

In allen Diagrammen der Fig. 11 bis 15 zeigt die durchgehende Linie die Verhältnisse beim idealen Oszillator, bei dem alle Längenwerte den theoretischen Werten entsprechen. Die strichlierte Linie simuliert eine (an sich sehr große) Abweichung von 2 cm zwischen den beiden Teleskop-Spiegeln 25, 26. Dabei zeigt sich, dass in der Praxis keine großen Abweichungen, jedoch haben Versuche gezeigt, dass Vibrationen und Temperaturdriften auftreten. Wenn aber der Laser (im Bereich des kurzen Resonatorarms 16) sogar bei großen Abweichungen keine drastische Verschiebung zeigt, kann angenommen werden dass auch kleine Vibrationen, die zu kleinen Änderungen im Abstand beispielsweise zwischen den Teleskop-Spiegeln 25, 26 führen, hinsichtlich der Stabilität keine Rolle spielen.

In Fig. 11 ist der Strahlradius R' in Querrichtung über der Resonatorlänge x in m für eine Laservorrichtung 11 aufgezeichnet, wobei die Resonatordaten wie folgt sind:

Kurzer Resonatorarm 16: 65 cm
langer Resonatorarm 17: 120 cm (mit dem Teleskop 18 im Anschluss daran)
Abstand zwischen den Teleskop-Spiegeln 25, 26: L/2 = 52 cm
Radius des konkaven Teleskop-Spiegels 26: R = 3550 mm
Gesamtlänge des Oszillators 12: 10,22 m

Dieses Diagramm entspricht einer Ausbildung mit einem Optimum in der Stabilität des Resonators 12. Allerdings sind hier die Abstände zwischen den Teleskop-Spiegeln 25, 26 nicht sehr groß, so dass die Umlaufzeit der Laserimpulse nicht so stark wie gewünscht verlängert und die Repetitionsrate nur auf 14,6 MHz reduziert würde.

Wie bereits vorstehend erwähnt stand für praktische Untersuchungen ein konkaver Spiegel mit einem Radius R = 5000 mm zur Verfügung. Mit diesem Spiegel als Teleskop-Spiegel 26 wurde eine Laservorrichtung wie beschrieben aufgebaut, wobei in Kauf genommen wurde, dass die optimale Stabilität (vgl. die Nulllinie in Fig. 10) nicht mehr gegeben ist, sondern eine geringfügige Abweichung hievon, vgl. den Punkt im Kästchen auf der Kurve 30 in Fig. 10. Die sich dabei ergebenden Abweichungen sind jedoch tolerierbar, da die Kurve 30 in diesem Bereich, wie aus Fig. 10 ersichtlich ist, sehr flach, mit einer Steigung von praktisch = 0, verläuft. In Fig. 12 ist das zugehörige Diagramm Strahlradius/Resonatorlänge dargestellt.

Die Resonatordaten waren hier wie folgt:

Kurzer Resonatorarm 16: 65 cm
langer Resonatorarm 17: 120 cm (Teleskop 18 im Anschluss daran)
Abstand der Teleskop-Spiegel 25, 26: L/2 = 73,2 cm
Radius des Teleskop-Spiegels 26: R = 5000 mm
Gesamtlänge des Resonators 12 : 13, 6 m

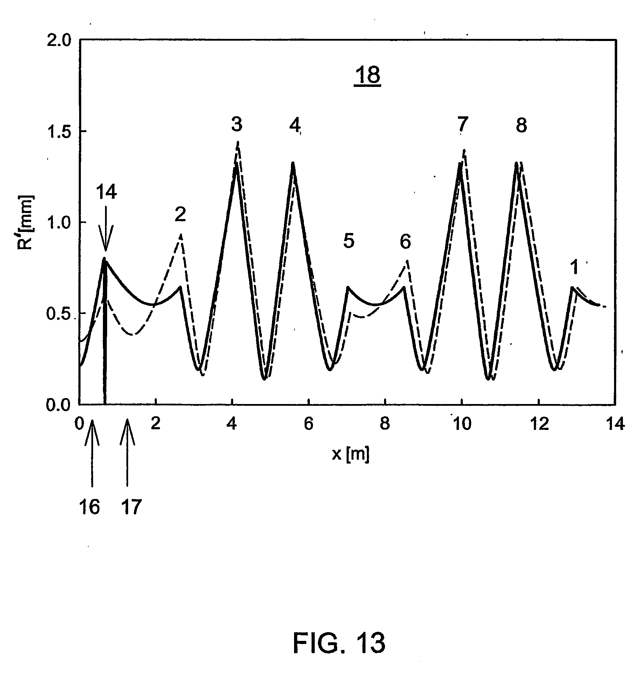

In Fig. 13 ist sodann ein Fall veranschaulicht, bei dem eine stark fokussierende Anordnung im Teleskop 18 im Anschluss an den langen Resonatorarm 17 vorgesehen wird; dabei ergibt sich eine nicht sehr stabile Konfiguration im Hinblick auf die Variation der Spiegel 25, 26 des Teleskops 18. Dies ist aus dem Diagramm von Fig. 13 unmittelbar aufgrund der Abweichungen der strichlierten Linie von der durchgezogenen Linie erkennbar.

Resonatordaten:

Kurzer Resonatorarm 16: 65 cm
langer Resonatorarm 17: 120 cm (Teleskop 18 im Anschluss daran)
Abstand der Teleskop-Spiegel 25, 26: L/2 = 73,2 cm
Radius des Teleskop-Spiegels 26: R = 849 mm
Gesamtlänge des Resonators 12: 13,6 m

Das Diagramm gemäß Fig. 13 würde somit angenähert dem Punkt 34 auf der Kurve 31 in Fig. 10 entsprechen.

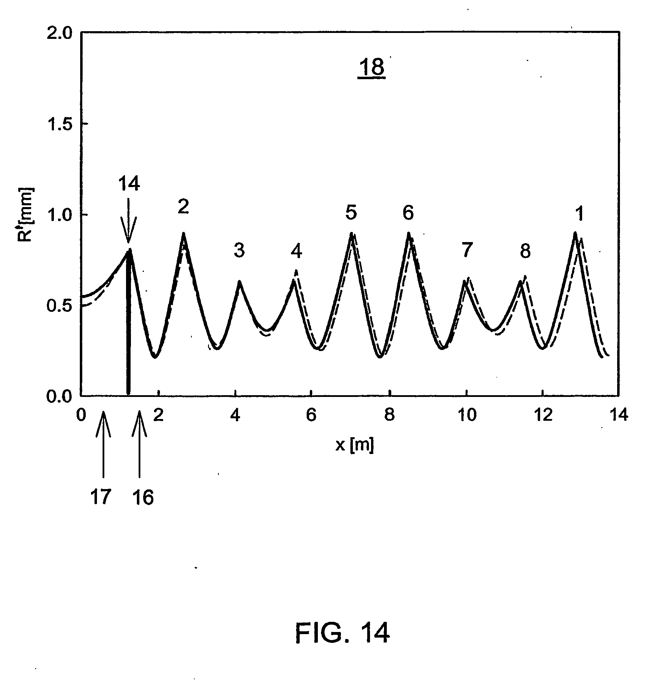

In Fig. 14 ist sodann der Fall dargestellt, in dem das Teleskop 18 im Anschluss an den kurzen Resonatorarm 16 angeordnet wird, wobei ersichtlich im Vergleich zur Fig. 13 im Falle einer stark fokussierenden Anordnung im Teleskop (wie vorstehend erwähnt) hinsichtlich Stabilität sogar etwas bessere Verhältnisse erzielt werden können. Diese stark fokussierende Anordnung ist an den kurzen Resonatorarm 16 besser angepasst. Das zeigen auch in Fig. 14 die nicht so stark variierenden Strahldurchmesser im Vergleich zu Fig. 13.

Die Resonatordaten zu Fig. 14 sind wie folgt:

Kurzer Resonatorarm 16: 65 cm (Teleskop 18 im Anschluss daran)
langer Resonatorarm 17: 120 cm
Abstand der Teleskop-Spiegel 25, 26: L/2 = 73,2 cm
Radius des Teleskop-Spiegels 26: R = 849 mm
Gesamtlänge des Resonators 12: 13,6 m

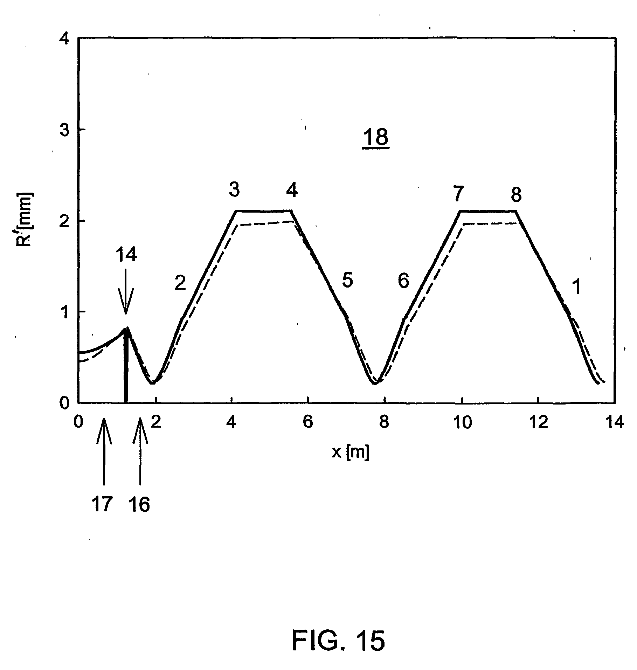

Aus dem Diagramm von Fig. 15 ergibt sich schließlich, wie vorteilhaft die Einkoppelung des Teleskops 18 in den langen Resonatorarm 17 ist, denn wenn sich das Teleskop 18 im Anschluss an den kurzen Resonatorarm 16 befindet, wird ein stark divergierender Laserstrahl 15 in das Teleskop 18 eingekoppelt. Der erste Reflexpunkt des schwach fokussierenden Teleskops 18 bewirkt im Gegensatz zur Darstellung in Fig. 11 nicht, den Laserstrahl wieder zu bündeln. Erst der zweite Reflexpunkt schafft diese Kollimierung nach einer langen Strecke. Deshalb ist der maximale Strahlradius R' an einzelnen Reflexpunkten des Teleskop-Spiegels > 2 mm, d.h. der Strahldurchmesser ist größer als 4 mm. In der Praxis muss aber ein um den Faktor 3 größerer Platz am Teleskop-Spiegel für den jeweiligen Strahl vorhanden sein, um keine Leistung zu verlieren. Dies bedeutet hier jedoch, dass pro Reflexpunkt eine Fläche mit einem Durchmesser von mehr als 1 cm am Spiegel vorgesehen sein muss, wodurch alle Fehler in der Gleichmäßigkeit des Spiegels verstärkt in die Laserstrahl-Abbildungen eingehen, was zu Strahldeformierungen führt.

Die zu Fig. 15 gehörigen Resonatordaten sind wie folgt:

Kurzer Resonatorarm 16: 65 cm (Teleskop im Anschluss daran)
langer Resonatorarm 17: 120 cm
Abstand der Teleskop-Spiegel 25, 26: L/2 = 73,2 cm
Radius des konkaven Teleskop-Spiegels 26: R = 5000 mm
Gesamtlänge des Resonators 12: 13,6 m

**Patentansprüche**

1. Mehrfachreflexions-Teleskop (18) für eine Kurzpuls-Laservorrichtung (11), zur Vergrößerung von dessen Resonatorlänge welches Mehrfachreflexions-Teleskop (18) mit Spiegeln (25, 26) aufgebaut ist, um einen in den Raum zwischen ihnen eingekoppelten Laserstrahl (15) vor seinem Auskoppeln zurück in die übrige Laservorrichtung mehrmals zwischen den Spiegeln hin und her zu reflektieren, wobei aufeinander folgende außermittige Reflexpunkte (1 bis 8; 1' bis 8') an den Spiegeln (25, 26) gegeneinander versetzt sind, **dadurch gekennzeichnet, dass** als Teleskop-Spiegel nur ein gekrümmter Spiegel (26) sowie ein planer Spiegel (25) vorgesehen sind, wobei die Position des planen Spiegels (25) zumindest im Wesentlichen der Mitte (25') einer gedachten Mehrfachreflexions-Anordnung mit zwei gekrümmten Spiegeln (26a, 26b) entspricht, von denen der eine durch den gekrümmten Spiegel (26) des Teleskops (18) gebildet ist, der über Reflexion am planen Spiegel (25) auch die Reflexpunkte des gedachten anderen gekrümmten Spiegels enthält.

2. Mehrfachreflexions-Teleskop nach Anspruch 1, **dadurch gekennzeichnet, dass** der gekrümmte Spiegel (26) ein konkaver Spiegel ist.

3. Teleskop nach Anspruch 1 oder 2, **dadurch gekennzeichnet, dass** auf dem gekrümmten Spiegel (26) abwechselnd Reflexpunkte dieses Spiegels sowie Reflexpunkte des gedachten anderen gekrümmten Spiegels in einander entsprechenden Bogenabständen auf einer gedachten Kreislinie angeordnet sind.

4. Teleskop nach einem der Ansprüche 1 bis 3, **dadurch gekennzeichnet, dass** insgesamt acht Reflexpunkte (1 bis 8) auf dem einen gekrümmten Spiegel (26) vorgesehen sind.

5. Teleskop nach einem der Ansprüche 1 bis 4, **dadurch gekennzeichnet, dass** der Abstand zwischen den Spiegeln (25, 26) und der Krümmungsradius des gekrümmten, konkaven Spiegels (26) der Beziehung $L/R = 1 \pm \sqrt{(1+\cos\alpha)/2}$ entsprechen, wobei

   L der doppelte Abstand zwischen dem gekrümmten Spiegel (26) und dem planen Spiegel ist,
   R der Krümmungsradius des gekrümmten Spiegels (26) ist, und
   $\alpha$ der Zentriwinkel zwischen jeweils zwei aufeinander folgenden, dem einen gekrümmten Spiegel tatsächlich zugeordneten, auf einer Kreislinie liegenden Reflexpunkten ist.

6. Teleskop nach Anspruch 5, **dadurch gekennzeichnet, dass** der gekrümmte Spiegel (26) des Teleskops (18) ein konkaver Spiegel ist, für den $L/R = 1 - \sqrt{(1+\cos\alpha/2)}$ gilt.

7. Teleskop nach einem der Ansprüche 4 bis 6, **dadurch gekennzeichnet, dass** im Wesentlichen in der Mitte zwischen dem gekrümmten Spiegel (26) und dem planen Spiegel (25) im Weg eines der Strahlgänge zwischen diesen beiden Spiegeln Ein- und Auskoppelspiegel (24, 27) für den Laserstrahl (15) vorgesehen sind.

8. Kurzpuls-Laservorrichtung (11) mit Modenverkopplung, mit einem Resonator (12), der einen Laserkristall (14) sowie mehrere Spiegel (M1-M7, OC) enthält, die einen langen Resonatorarm (17) sowie einen kurzen Resonatorarm (16) definieren, und von denen einer (M1) einen Pumpstrahl-Einkoppelspiegel und einer (OC) einen Laserstrahl-Auskoppler bildet, und mit einem die Resonatorlänge vergrößernden, einem der Resonatorarme (16, 17) zugeordneten Mehrfachreflexions-Teleskop (18), welches mit Spiegeln (25, 26) aufgebaut ist, um einen in den Raum wischen ihnen eingekoppelten Laserstrahl (15) vor seinem Auskoppeln zurück in den übrigen Resonator mehrmals zwischen den Spiegeln hin und her zu reflektieren, wobei aufeinander folgende außermittige Reflexpunkte (1 bis 8; 1' bis 8') an den Spiegeln (25, 26) gegeneinander versetzt sind, **dadurch gekennzeichnet, dass** als Teleskop (18) ein Mehrfachreflexions-Teleskop gemäß einem der Ansprüche 1 bis 7 vorgesehen ist.

9. Kurzpuls-Laservorrichtung nach Anspruch 8, **dadurch gekennzeichnet, dass** das Teleskop (18) dem langen Resonatorarm (17) zugeordnet ist.

10. Kurzpuls-Laservorrichtung nach Anspruch 8 oder 9, **dadurch gekennzeichnet, dass** als Modenverkopplung eine passive Modenverkopplung vorgesehen ist.

**Claims**

1. A multiple reflection telescope (18) for a short-pulse laser device (11), for increasing its resonator length, which multiple-reflection telescope (18) is constructed using mirrors (25, 26) so as to reflect a laser beam (15) coupled into the space between them back and forth between the mirrors several times before it is out-coupled back into the remaining laser device, sequential eccentric reflection points (1 to 8; 1' to 8') on the mirrors (25, 26) being offset relative to each other, **characterized in that** as said telescope mirrors, only one curved mirror (26) as well as a plane mirror (25) are provided, the position of the plane mirror (25) at least substantially corresponding to the middle (25') of an imaginary multiple reflection arrangement with two curved mirrors (26a, 26b), one of which being formed by the curved mirror (26) of the telescope (18), which also contains the reflection points of the imaginary other curved mirror via reflection on the plane mirror (25).

2. The multiple-reflection telescope according to claim 1, **characterized in that** the curved mirror (26) is a concave mirror.

3. The telescope according to claim 1 or 2, **characterized in that** on the curved mirror (26) alternatingly reflection points of this mirror as well as reflection points of the imaginary other curved mirror are arranged on an imaginary circle line at arcuate distances corresponding to each other.

4. The telescope according to any one of claims 1 to 3, **characterized in that** a total of eight reflection points (1 to 8) are provided on the one curved mirror (26).

5. The telescope according to any one of claims 1 to 4, **characterized in that** the distance between the mirrors (25, 26) and the radius of curvature of the curved, concave mirror (26) correspond to the relation L/R = 1 ± √(1+cosα)/2, wherein L is twice the distance between the curved mirror (26) and the plane mirror, R is the radius of curvature of the curved mirror (26), and α is the central angle between two respective sequential reflection points actually associated to the one curved mirror and located on a circle line.

6. The telescope according to claim 5, **characterized in that** the curved mirror (26) of the telescope (18) is a concave mirror for which it holds:

$$\mathrm{L/R \ = \ 1 \ - \ \sqrt{(1+\cos\alpha)/2}.}$$

7. The telescope according to any one of claims 4 to 6, **characterized in that** substantially in the middle between the curved mirror (26) and the plane mirror (25), in- and out-coupling mirrors (24, 27) for the laser beam (15) are provided in the path of one of the beam paths between these two mirrors.

8. A short pulse laser device (11) with mode-locking, with a resonator (12) containing a laser crystal (14) as well as several mirrors (M1-M7, OC) which define a long resonator arm (17) as well as a short resonator arm (16), wherein one (M1) of the mirrors forms a pump beam in-coupling mirror, and another one (OC) forms a laser beam out-coupler, and with a multiple-reflection telescope (18) increasing the resonator length and associated to one of the resonator arms (16, 17), which telescope is constructed using mirrors (25, 26) in order to reflect a laser beam (15) coupled into the space between them back and forth between the mirrors several times before it is out-coupled back into the remaining resonator, sequential eccentric reflection points (1 to 8; 1' to 8') on the mirrors (25, 26) being offset relative to one another, **characterized in that** as said telescope (18), a multiple-reflection telescope according to any one of claims 1 to 7 is provided.

9. The short-pulse laser device according to claim 8, **characterized in that** the telescope (18) is associated to the long resonator arm (17).

10. The short-pulse laser device according to claim 8 or 9, **characterized in that** a passive mode-locking is provided as said mode-locking.

## Revendications

1. Télescope à réflexions multiples (18) pour dispositif laser à impulsions courtes (11), pour l'agrandissement de sa longueur de résonateur, lequel télescope à réflexions multiples (18) est construit avec des miroirs (25, 26) pour réfléchir dans un sens et dans l'autre, plusieurs fois entre les miroirs vers le dispositif à laser restant, un rayon laser (15) injecté dans l'espace compris entre ces derniers avant sa sortie, dans lequel des points de réflexion excentrés successifs (1 à 8 ; 1' à 8') sont décalés l'un de l'autre sur les miroirs (25, 26), **caractérisé en ce qu'**il n'est prévu comme miroirs de télescope qu'un miroir incurvé (26) ainsi qu'un miroir plan (25), et **en ce que** la position du miroir plan (25) correspond au moins sensiblement au centre (25') d'un aménagement à réflexions multiples imaginaire ayant deux miroirs incurvés (26a, 26b), dont l'un est formé par le miroir incurvé (26) du télescope (18), qui contient également par réflexion sur le miroir plan (25) les points de réflexion de l'autre miroir incurvé imaginaire.

2. Télescope à réflexions multiples selon la revendication 1, **caractérisé en ce que** le miroir incurvé (26) est un miroir concave.

3. Télescope selon la revendication 1 ou 2, **caractérisé en ce que** des points de réflexion du miroir incurvé (26) ainsi que des points de réflexion de l'autre miroir incurvé imaginaire sont aménagés alternativement sur le miroir incurvé (26) à intervalles d'arc correspondants sur une ligne circulaire imaginaire.

4. Télescope selon l'une quelconque des revendications 1 à 3, **caractérisé en ce qu'**il est prévu, dans l'ensemble, huit points de réflexion (1 à 8) sur l'un quelconque des miroirs incurvés (26).

5. Télescope selon l'une quelconque des revendications 1 à 4, **caractérisé en ce que** la distance entre les miroirs (25, 26) et le rayon de courbure du miroir incurvé concave (26) correspondent à la relation suivante :

$$L/R = 1 \pm \sqrt{(1+\cos\alpha)/2} \ ,$$

où

L représente la double distance entre le miroir incurvé (26) et le miroir plan,

R est le rayon de courbure du miroir incurvé (26), et

$\alpha$ représente l'angle au centre entre deux points de réflexion successifs respectifs, réellement affectés au premier miroir incurvé et situés sur une ligne circulaire.

6. Télescope selon la revendication 5, **caractérisé en ce que** le miroir incurvé (26) du télescope (18) est un miroir concave, correspondant à la relation suivante :

$$L/R = 1 - \sqrt{(1 + \cos\alpha/2)} \, .$$

7. Télescope selon l'une quelconque des revendications 4 à 6, **caractérisé en ce que** des miroirs d'entrée et de sortie (24, 27) pour le rayon laser (15) sont disposés sensiblement au centre entre le miroir incurvé (26) et le miroir plan (25) dans le chemin d'un des trajets de rayon, entre ces deux miroirs.

8. Dispositif laser à impulsions courtes (11), comprenant un couplage de modes, un résonateur (12) contenant un cristal laser (14) ainsi que plusieurs miroirs (M1 à M7, OC), qui définissent un bras de résonateur long (17) et un bras de résonateur court (16), et dont l'un des miroirs (M1) forme un miroir d'entrée de rayon de pompage et dont un autre miroir (OC) forme un dispositif de sortie de rayon laser, et comprenant un télescope à réflexions multiples (18) agrandissant la longueur du résonateur et affecté aux bras de résonateur (16, 17), qui est construit avec des miroirs (25, 26) pour réfléchir dans un sens et dans l'autre, plusieurs fois entre les miroirs vers le résonateur restant, un rayon laser (15) injecté dans l'espace compris entre ces derniers avant sa sortie, dans lequel des points de réflexion excentrés successifs (1 à 8 ; 1' à 8') sont décalés l'un de l'autre sur les miroirs (25, 26), **caractérisé en ce que** le télescope à réflexions multiples (18) est conforme à l'une quelconque des revendications 1 à 7.

9. Dispositif laser à impulsions courtes selon la revendication 8, **caractérisé en ce que** le télescope (18) est affecté au bras de résonateur long (17).

10. Dispositif laser à impulsions courtes selon la revendication 8 ou 9, **caractérisé en ce que** le couplage de modes est un couplage de modes passif.

FIG. 1

EP 1 506 601 B1

**FIG. 2**

**FIG. 7**

**FIG. 3**

**FIG. 6**

FIG. 4

FIG. 5

FIG. 8

FIG. 9

FIG. 10

FIG. 11

FIG. 12

FIG. 13

FIG. 14

FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 405992 B

**In der Beschreibung aufgeführte Nicht-Patentliteratur**

- **von D. Herriott et al.** Off-Axis Paths in Spherical Mirror Interferometers. *Applied Optics,* April 1964, vol. 3 (4), 523-526

- **von S.H. Cho et al.** Generation of 90-nJ pulses with a 4-MHz repetition-rate Kerr-lens mode-locked Ti:Al2O3 laser operating with net positive and negative intracavity dispersion. *Optics Letters,* 15. April 2001, vol. 26 (8), 560-562
- **von A. Poppe et al.** A Sub-10 fs, 2.5-MW Ti:Sapphire Oscillator. *Ultrafast Optics,* 1999, 154-157